# EUROPEAN PATENT SPECIFICATION

(11) **EP 4 235 563 B1**
(45) Date of publication and mention of the grant of the patent: **03.04.2024**
(21) Application number: 22158997.1
(22) Date of filing: 25.02.2022
(51) Int. Cl.: G06T 5/00, G06T 7/521, G01B 21/04, G01B 11/25

(54) **METHOD AND ARRANGEMENTS FOR REMOVING ERRONEOUS POINTS FROM A SET OF POINTS OF A 3D VIRTUAL OBJECT PROVIDED BY 3D IMAGING**
VERFAHREN UND ANORDNUNGEN ZUM ENTFERNEN VON FEHLERHAFTEN PUNKTEN AUS EINEM SATZ VON PUNKTEN EINES VIRTUELLEN 3D-OBJEKTS, DAS DURCH 3D-BILDGEBUNG BEREITGESTELLT WIRD
PROCÉDÉ ET AGENCEMENTS POUR SUPPRIMER DES POINTS ERRONÉS D'UN ENSEMBLE DE POINTS D'UN OBJET VIRTUEL 3D FOURNI PAR IMAGERIE 3D

(43) Date of publication of application: 30.08.2023
(73) Proprietor: Sick IVP AB, 583 30 Linköping (SE)
(72) Inventor: EDHAMMER, Jens, 587 34 Linköping (SE); JOHANNESSON, Mattias, 583 93 Linköping (SE); WRANGSJÖ, Andreas, 582 55 Linköping (SE); ÖBERG, Andreas, 582 23 Linköping (SE)
(74) Representative: Bergenstråhle & Partners AB

(56) References cited:
- US-A1- 2020 340 800
- PARK J ET AL: "3D Modeling of Optically Challenging Objects", IEEE TRANSACTIONS ON VISUALIZATION AND COMPUTER GRAPHICS, IEEE, USA, vol. 14, no. 2, 1 March 2008 (2008-03-01), pages 246-262, XP011344459, ISSN: 1077-2626, DOI: 10.1109/TVCG.2007.1069
- TRUCCO E ET AL: "CALIBRATION, DATA CONSISTENCY AND MODEL ACQUISITION WITH LASER STRIPERS", INTERNATIONAL JOURNAL OF COMPUTER INTEGRATED MANUFACTURING, TAYLOR AND FRANCIS, BASINGSTOKE, GB, vol. 11, no. 4, 1 July 1998 (1998-07-01), pages 293-310, XP000827664, ISSN: 0951-192X, DOI: 10.1080/095119298130642

## Description

### TECHNICAL FIELD

Embodiments herein concern a method and arrangements for removing erroneous points from a set of points of a three dimensional, 3D, virtual object provided by 3D imaging of a corresponding real world object by means of a camera with image sensor.

### BACKGROUND

Industrial vision cameras and systems for factory and logistic automation may be based on three-dimensional (3D) machine vision, where 3D-images of a scene and/or object are captured. By 3D-images is referred to images that comprise also "height", or "depth", information and not, or at least not only, information, e.g. intensity and/or color, regarding pixels in only two-dimensions (2D) as in a conventional image. That is, each pixel of the image may comprise information associated with the position of the pixel and that maps to a position of what has been imaged, e.g. the object. Processing may then be applied to extract information on characteristics of the object from the 3D images, i.e. 3D-characteristics of the object, and e.g. convert to various 3D image formats. Such information on height may be referred to as range data, where range data thus may correspond to data from height measurement of the object being imaged, or in other words from range or distance measurements of the object. Alternatively or additionally the pixel may comprise information on e.g. material properties such as relating to the scattering of the light in the imaged area or the reflection of a specific wavelength of light.

Hence, a pixel value may e.g. relate to intensity of the pixel and/or to range data and/or to material properties.

Line scan image data results when image data of an image is scanned or provided one line at a time, e.g. by camera with a sensor configured to sense and provide image data, one line of pixels at a time. A special case of line scan image is image data provided by so called "sheet of light", e.g. laser-line, 3D triangulation. Laser is often preferred but also other light sources able to provide the "sheet of light" can be used, e.g. light sources able to provide light that stays focused and do not spread out to much, or in other words, light that is "structured", for example light provided by a laser or Light Emitting Diode (LED).

3D machine vision systems are often based on such sheet of light triangulation. In such a system there is a light source illuminating the object with a specific light pattern, such as the sheet of light as the specific light pattern, e.g. resulting in a light, or laser, line on the object and along which line 3D characteristics of the object can be captured, corresponding to a profile of the object. By scanning the object with such a line, i.e. performing a line scan, involving movement of the line and/or object, 3D characteristics of the whole object can be captured, corresponding to multiple profiles.

3D machine vision systems or devices that use a sheet of light for triangulation may be referred to as systems or devices for 3D imaging based on light, or sheet of light, triangulation, or simply laser triangulation when laser light is used.

Typically, to produce a 3D-image based on light triangulation, reflected light from an object to be imaged is captured by an image sensor of a camera and intensity peaks are detected in the image data. The peaks occur at positions corresponding to locations on the imaged object with the incident light, e.g. corresponding to a laser line, that was reflected from the object. The position in the image of a detected peak will map to a position on the object from where the light resulting in the peak was reflected.

A laser triangulating camera system, i.e. an imaging system based on light triangulation, projects a laser line onto an object to create height curves from the surface of the target object. By moving the object relative to the cameras and light sources involved, information on height curves from different parts of the object can be captured by images and then combined and used with knowledge of relevant geometries of the system to produce a three dimensional representation of the object, i.e. 3D image data is provided. This technique may be described as grabbing of images of the light, typically a laser line, when it is projected onto and reflected by the object and then in the images extract positions of the reflected laser line. This is normally accomplished by identifying positions of intensity peaks in the image frames e.g. using a conventional peak finding algorithm. Typically but not necessary the imaging system is setup so that intensity peaks can be searched for per column of the sensor and the position within the column maps to a height or depth.

Any measurement system, including 3D imaging system such as 3D machine vision systems mentioned above, can produce outliers. Outliers are generally different based on the measurement technique used and thus depend on the 3D imaging system used, and there can be several different origins for outliers within the same system. Outliers are by definition unwanted and can in industrial measurement applications make inspection task more difficult and sometimes impossible.

Outliers can correspond to image data not correctly representing and/or corresponding to an actual point of a real word object that was imaged.

When a 3D imaging system is used to produce a 3D virtual object of an imaged real world object, there is typically provided a point cloud, i.e. a set of set of points that correspond to surface points of the 3D virtual object. If the real world object is in a real world coordinate system x, y, z, the 3D virtual object may be in a corresponding virtual coordinate system x', y', z'. Outliers may manifest in the point cloud as points that do not correspond to an actual real point on the surface of the real world object, i.e. the outliers correspond to erroneous points, and can e.g.be seen as "spikes" on the virtual object if the virtual object is drawn up based on the point cloud.

Outliers may be generated, and also removed and/or reduced, in different steps during 3D imaging. In case of laser triangulation as described above some outliers can e.g. be reduced during intensity peak finding. Outliers not removed by earlier steps will in the end be present in the "point cloud" as erroneous points.

U2020340800A1 discloses a solution for particularly light triangulation where erroneous detection values are determined based on whether a profile exists in a blind spot region in which it is impossible to measure a height. In that case, part of the profile, determined as an erroneous detection value, is deleted.

### SUMMARY

In view of the above, an object is to provide one or more improvements or alternatives to the prior art, such as providing improvements regarding reduction of negative impact from erroneous points corresponding to outliers in a point cloud, i.e. is a set of points of a 3D virtual object provided by 3D imaging of a corresponding real world object.

According to a first aspect of embodiments herein, the object is achieved by a method for removing erroneous points from a set of points of a three dimensional, 3D, virtual object that has been provided by 3D imaging of a corresponding real world object by means of a camera with image sensor. Said set of points is obtained. It is then identified, for respective point, conflicting points, if any, in the set. A conflicting point being a point of the set that cannot validly coexist with the respective point according to predefined one or more criteria. It is thereafter removed, from the set, based on said identification for respective point of the set, one or more points of the set that have been involved in conflicts a greater number of times than other points of the set involved in conflicts. A respective point of the set is considered involved in a conflict each time there is identified a conflicting point in the set for the respective point and/or each time the respective point itself is identified as a conflicting point to another point of the set.

According to a second aspect of embodiments herein, the object is achieved by a computer program comprising instructions that when executed by one or more processors causes one or more devices to perform the method according to the first aspect.

According to a third aspect of embodiments herein, the object is achieved by a carrier comprising the computer program according to the second aspect.

According to a fourth aspect of embodiments herein, the object is achieved by one or more devices for removing erroneous points from a set of points of a three dimensional, 3D, virtual object that has been provided by 3D imaging of a corresponding real world object by means of a camera with image sensor. Said device(s) is configured to obtain said set of points. Said device(s) is further configured to identify, for respective point, conflicting points, if any, in the set. A conflicting point being a point of the set that cannot validly coexist with the respective point according to predefined one or more criteria. Moreover, the device(s) is configured to remove, from the set, based on said identification for respective point of the set, one or more points of the set that have been involved in conflicts a greater number of times than other points of the set involved in conflicts. A respective point of the set is considered involved in a conflict each time there is identified a conflicting point in the set for the respective point and/or each time the respective point itself is identified as a conflicting point to another point of the set.

Embodiments herein provide improvements compared to deletion or removal each time a conflicting point is identified, which in many situations result in that also correct points are removed in case of conflict. With embodiments herein more correct points can remain while still truly incorrect points, i.e. points corresponding to outliers, not in positions corresponding to imaged real locations on the real world object, can be removed. Embodiments herein may be considered based on a statistical approach, and/or "consensus voting", and may be compared to solutions mentioned in the Background, where decision for removal is based on there being identified a conflict, but not considering a total of points and not based on how many conflicts respective point has been involved in.

### BRIEF DESCRIPTION OF THE DRAWINGS

Examples of embodiments herein are described in more detail with reference to the appended schematic drawings, which are briefly described in the following.
Figure 1 schematically illustrates an example of a prior art 3D imaging system based on light triangulation, and that also embodiments herein can use and/or be based on.
Figure 2 schematically illustrates a simplified example of how a point cloud in the prior art can be generated by means of a 3D imaging system as in Figure 1.
Figure 3A schematically illustrates an examples of an imaging system, that can be configured to carry out embodiments herein, and a measure object.
Figure 3B schematically illustrates a 3D view of part of the imaging system and measure object shown in Figure 3A.
Figure 3C schematically illustrates a side view of part of the imaging system and measure object shown in Figures 3A-B.
Figures 3D-F schematically illustrates points of a point cloud and correspond to a virtual view of the measure object side view shown in Figure 3C.
Figure 4 is a flowchart for schematically illustrating embodiments of a method according to embodiments herein.
Figures 5A-B show virtual 3D object images of a measure object without and with application of embodiments herein, respectively.
Figure 6 is a schematic block diagram for illustrating embodiments of how one or more devices may be configured to perform the method and actions discussed in relation to Figure 4.
Figure 7 is a schematic drawing illustrating some embodiments relating to computer program and carriers thereof to cause device(s) to perform the method and actions discussed in relation to Figure 4.

### DETAILED DESCRIPTION

Embodiments herein are exemplary embodiments. It should be noted that these embodiments are not necessarily mutually exclusive. Components from one embodiment may be tacitly assumed to be present in another embodiment and it will be obvious to a person skilled in the art how those components may be used in the other exemplary embodiments.

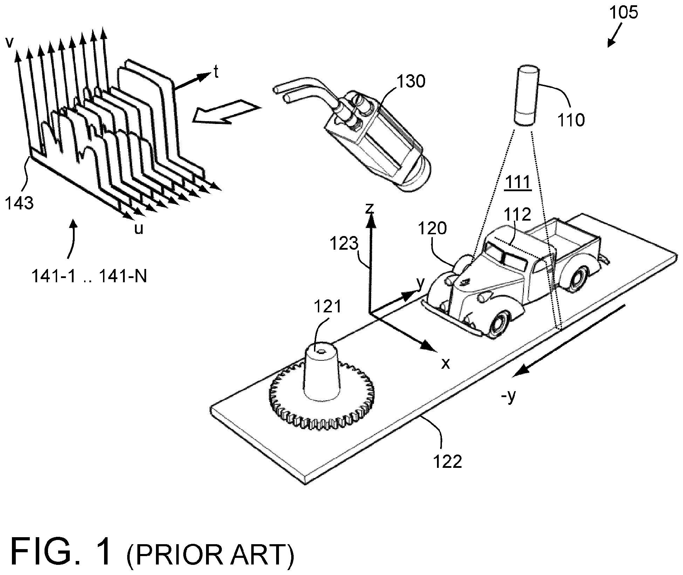

**Figure 1** schematically illustrates an example of such type of imaging system as mentioned in the Background, namely an imaging system 105, for 3D machine vision, based on light triangulation for capturing information on 3D characteristics of measure objects. The system can be used for providing 3D images in the form of a set of surface points, i.e. a point cloud, that embodiments herein, described further below, can operate on. The system 105 is in the figure shown in a situation of normal operation, i.e. typically after calibration has been performed and the system is thus calibrated. The system 105 is configured to perform light triangulation, here in the form of sheet of light triangulation as mentioned in the Background. The system 105 further comprises a light source 110, e.g. a laser, for illuminating measure objects to be imaged with a specific light pattern 111, in the figure exemplified and illustrated as a sheet of light. The light may, but not need to be, laser light. In the shown example, the target objects are exemplified by a first measure object 120 in the form of a car and a second measure object 121 in the form of a gear wheel construction. When the specific light pattern 111 is incident on an object, this corresponds to a projection of the specific light pattern 111 on the object, which may be viewed upon as the specific light pattern 111 intersects the object. For example, in the shown example, the specific light pattern 111 exemplified as the sheet of light, results in a light line 112 on the first measure object 120. The specific light pattern 111 is reflected by the object, more specifically by portions of the object at the intersection, i.e. at the light line 112 in the shown example. The system 105 further comprises a camera 130 comprising an image sensor (not shown in Figure 1). the camera and image sensor are arranged in relation to the light source 110 and the objects to be imaged so that the specific light pattern, when reflected by the objects, become incident light on the image sensor. The image sensor is an arrangement, typically implemented as a chip, for converting incident light to image data. Said portions of the object, which by reflection causes said incident light on the image sensor, may thereby be captured by the camera 130 and the image sensor, and corresponding image data may be produced and provided for further use. For example, in the shown example, the specific light pattern 111 will at the light line 112 on a portion of the car roof of the first measure object 120 be reflected towards the camera 130 and image sensor, which thereby may produce and provide image data with information about said portion of the car roof. With knowledge of the setup, including the geometry, of the system 105, e.g. how image sensor coordinates relate to real world coordinates, such as coordinates of a coordinate system 123, e.g. Cartesian, relevant for the object being imaged and its context, the image data may be converted to information on 3D characteristics, e.g. a 3D shape or profile, of the object being imaged in a suitable format. The information on said 3D characteristics, e.g. said 3D shape(s) or profile(s), may comprise data describing 3D characteristics in any suitable format.

By moving e.g. the light source 110 and/or the object to be imaged, such as the first measure object 120 or the second object 121, so that multiple portions of the object are illuminated and cause reflected light upon the image sensor, in practice typically by scanning the objects, image data describing a more complete 3D shape of the object may be produced, e.g. corresponding to multiple, consecutive, profiles of the object, such as the shown profile images 141-1 - 141-N of the first measure object 120, where each profile image shows a contour of the first object 120 where the specific light pattern 111 was reflected when the image sensor of the camera unit 130 sensed the light resulting in the profile image. As indicated in the figure, a conveyor belt 122 or similar may be used to move the objects through the specific light pattern 112, with the light source 110 and the camera unit 130 typically stationary, or the specific light pattern 111 and/or the camera 130 may be moved over the object, so that all portions of the object, or at least all portions facing the light source 110, are illuminated and the camera can receive light reflected from different parts of the object desirable to image.

As understood from the above, an image frame provided by the camera 130 and its image sensor, e.g. of the first measure object 120, may correspond to any one of the profile images 141-1 - 141-N. As mentioned in the Background, each position of the contour of the first object shown in any of the profile images 141-1 - 141-N are typically determined based on identification of intensity peaks in image data captured by the image sensor and on finding the positions of these intensity peaks. The system 105 and conventional peak finding algorithms are typically configured to in each image frame search for an intensity peak per pixel column. If sensor coordinates are u, v, and for example u, as indicted in the figure, corresponds to pixel positions along rows in the image sensor and v corresponds to pixel positions along columns, there is for each position u of an image frame searched for peak position along v and the identified peaks in an image frame may result in one the profile images 141-1 - 141-N as shown in the figure. The profile images are formed by image points in a sensor based coordinate system 143, u, v, t. The total of image frames and profile images can be used to create a 3D image of the first object 120.

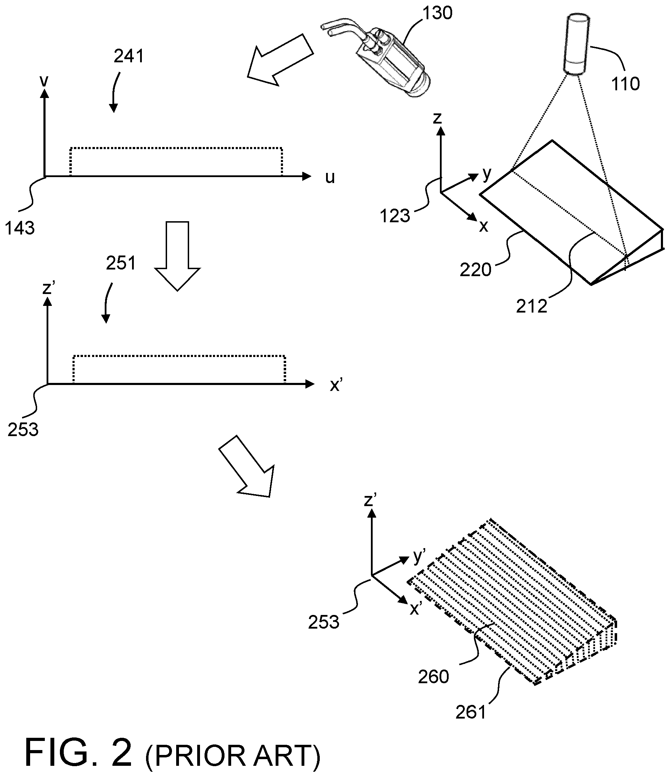

**Figure 2** schematically illustrates a simplified example of how a point cloud, i.e. a set of surface points of a 3D virtual object, as in the prior art can be generated by means of a 3D imaging system as in Figure 1, for facilitating understanding for embodiments herein discussed further below.

A wedge shaped measure object 220 is used in the example. Except for the measure object, the image system 105 may be as in Figure 1. When an image has been captured by the image sensor of the camera 130 at a light line 212 positioned on the measure object 220 as shown in the figure, and intensity peaks identified, the result may be points at image sensor coordinates u, v as shown in the figure. In the example, points correspond to samples of the surface of the measure object 220, i.e. the points correspond to surface points. Note that points are drawn here instead of lines connecting the points as is the case for the profile images 141-1..141-N in Figure 1. Each point is at an intensity peak position. Using said knowledge of the geometry of the system 105 and setup used, how image sensor coordinates in u, v, and the time t when an image was captured by the sensor, relate to real world coordinates x, y, z, the points, or rather the positions of the points in coordinates u, v, t, such as in the sensor based coordinate system 143, can be converted to respective positions in a 3D virtual coordinate system x', y', z'. When the complete measure object 220 has been scanned by the light line 212, the result can thus be such set of points, i.e. point cloud, 260 as shown in the figure. In the shown example, the set of points 260 corresponds to samples of the surface of the measure object 220 and thus can be used to e.g. draw a corresponding virtual object. The contours of the virtual object have been indicated by a dotted line 261 in the figure to facilitate understanding that the set of points 260 corresponds to the measure object 220.

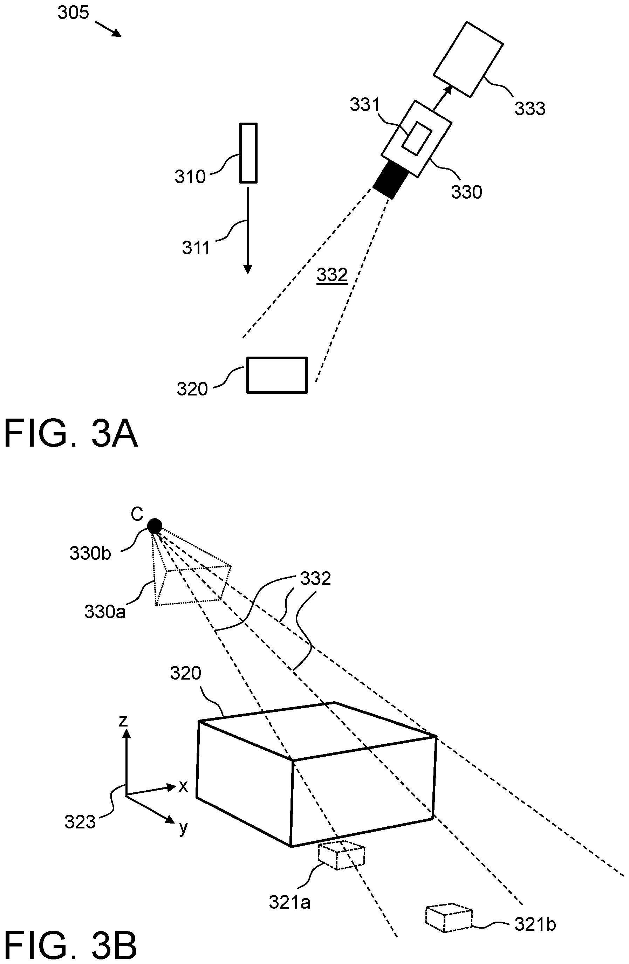

**Figure 3A** schematically illustrates a simplified first example of a an imaging system 305 that can be configured to carry out embodiments herein, i.e. is for implementing embodiments herein. The imaging system 305 is based on light triangulation for capturing information on 2D and 3D characteristics of one or more measure objects.

The shown system corresponds to a basic configuration and comprises: A light source 310 for illuminating a measure object 320 with light 311, typically laser light, as part of light triangulation for 3D imaging of the measure object 220. A camera 330 with image sensor 331 arranged for sensing reflected light from the measure object 320 as part of said light triangulation for the 3D imaging.

The camera 330, image sensor 331 and light source 310 are configured and positioned in relation to each other for light triangulation. The system 305 may for the light triangulation purpose correspond to the system 105 in Figure 1, but may additionally be configured to perform according to embodiments herein as described further below.

Hence: The measure object 320 may correspond to the first measure object 120, or the measure object 220, and is shown located at least partly within field of view 332 of the camera 330. The light source 310 is configured to illuminate the measure object 320 with the light 311, typically in the form of structured light, such as a specific light pattern, for example a sheet of light and/or a light, such as laser, line, that is reflected by the measure object 320 and the reflected first light is captured by the camera 330 and image sensor 331. Another example of structured light that can be used as the first light is a light edge, i.e. an edge of an area or portion with illumination. The illumination is in the example in a vertical direction, i.e. substantially parallel to the z-axis. However, as will be realized from the below, other direction or directions of illumination are of course possible to use with embodiments herein, including, for example, so called "specular" configuration with the light source, e.g. laser, substantially pointing at the measure object with a "specular" incident angle, corresponding to the viewing angle of the camera but from the opposite side.

The measure object 320 may thus be illuminated and images may be captured as in conventional light triangulation. Said light triangulation as such may thus be as in the prior art and involve movement of the light source 310 and/or the measure object 320 in relation to each other, so that at different consecutive time instants, different consecutive portions of the measure object 320 are illuminated by the light source 310 and the light 211. Light 311 after reflection from the measure object 320 is sensed by the image sensor 331. In light triangulation, typically, but not necessary, the camera 330 and first light source 310 are fixed in relation to each other and the measure object 320 moves in relation to these. Through said sensing by the image sensor 331, a respective image frame is associated with a respective time instant of when the image frame was sensed, i.e. captured, and with a respective portion of the measure object 320 from which the image sensor 331 sensed reflected first light 311 at the respective time instant.

Image frames and/or information derived from image frames, e.g. intensity peak positions, provided by the camera 330 and the image sensor 331 may be transferred for further processing outside the camera 330, e.g. to a computing device 333, such as a computer or similar. Such further processing may additionally or alternatively be performed by a separate computing unit or device (not shown), e.g. separate from the image sensor 331, but still comprised in, e.g. integrated with, the camera 330, or a unit comprising the camera 330. The computing device 333, e.g. computer, or another device (not shown) may be configured to control devices involved in the light triangulation, so that the light triangulation and related actions are performed. Moreover, said computing device 333, e.g. computer, or another device (not shown) may be configured to perform as described above in connection to Figure 2, e.g. based on said image frames and/or information derived from the image frames provided by the camera 330 and the image sensor 331. Said computing device 333, e.g. computer, or said another device (not shown) may thereby provide a set of points, i.e. point cloud, of a 3D virtual object corresponding to the measure object 320. In some embodiments, said computing device 333, e.g. computer, or another device (not shown) is further configured to perform actions relating to embodiments herein, described further below.

Consider a reasonable and practical assumption that a measure object, e.g. the measure object 320, has a continuous surface with no surface portions or points "floating in the air" without connection through surface to at least some other portion and point of the object, i.e. the assumption is that all surface points are connected to one or more adjacent surface points. This is an assumption that will be correct and correspond to actual circumstances for in principle all points. If there is a special situation, e.g. imaging system and/or measure object used where this fully or partly is not the case, due to a special setup and/or object, such situation can typically be identified in advance and be handled as a special case. The assumption thus has no, or neglectable, negative practical consequences. The same should hold also for surface points of the point cloud based on 3D imaging of such measure object. That is, that all surface points of the point cloud are connected by coherent surface with closest neighboring surface points and that there is coherent surface also between surface points. This is typically also the normal assumption when tessellation is used to visualize a 3D virtual object based on a point cloud and corresponds to that all surface points are connected by a straight line(s) to their closest neighboring surface point(s) with assumption that in addition to the surface points as such, the lines and surface between the lines correspond to coherent and non-transparent surface of the actual measure object, i.e. no holes or transparent areas in the surface between surface points that the camera can see through.

**Figure 3B** schematically illustrates the measure object 320 in a 3D view and shown in a real world coordinate system 323, in coordinates x, y, z. The camera 330 is here represented by its camera optical center, C, 330b and a virtual frustum 330a corresponding to the field of view. What will be imaged by the camera 330 and image sensor 331 are thus light rays incident in the virtual frustum 330a. Three such light rays 332 are drawn in the figure just as example, corresponding to light rays from just above the top and most remote edge of the measure object 320 in relation to the camera 330. Also, only for the example, two dummy objects 321a-b are shown in the figure. It is realized that with the camera positioned as in the example, a physical object corresponding to the dummy object 321a cannot be imaged by the camera 330 due to that it is occluded, or "shadowed", by the measure object 320. This corresponds to that the dummy object 321a is located below the light rays 332. The dummy object 321b, on the other hand, can be imaged since it is not occluded by the measure object 320 as seen from the camera 330, and is located so that light rays from the dummy object 321b can reach and be imaged by the camera 330.

A surface point of a point cloud, such as the point cloud 260, can be evaluated with respect to the camera, e.g. the camera 130, or view, direction used when taking an image that this surface point is based on. When an image is taken, based on the reasonable assumption above, there may be parts that are occluded by other parts of the measure object, e.g. the measure object 220 or 320. The same principle can be utilized for evaluation of surface points of the point cloud. However, in that case the corresponding camera direction should be in the 3D virtual coordinate system x', y', z' of the point cloud, e.g. the 3D virtual coordinate system 253 in case of the point cloud 260. That is, the camera direction when imaging a point of a real world object surface point, e.g. of the measure object 220 or 320, in the real world coordinate system x, y, z, e.g. real world coordinate system 223 or 323, may be converted to a corresponding, i.e. virtual, camera direction in the 3D virtual coordinate system x', y', z', e.g. the 3D virtual coordinate system 253. As an alternative, the corresponding camera direction to be used for points of the point cloud may be determined directly in the 3D virtual coordinate system, i.e. in x',y',z', based on known relations between the involved coordinate systems, e.g. as given by settings and relations for the 3D imaging system and setup used, e.g. as used for light triangulation when that kind of 3D imaging system is used.

One way of utilizing the above is to, for each surface point of the point cloud, e.g. of the point cloud 260, identify conflicting point or points of the point cloud. That is, for each point identify and/or investigate if there is any other point or points that cannot validly exist at the same time as the point of investigation, e.g. due to the at least one of them is occluded by the other. Two surface points can be considered conflicting if one of the points is "in the way" of the other, or of each other, and it thus would be impossible for the camera to see them both at the same time. In other words, if that is the case, one, or at least one, of the points in conflict must be false, or incorrect. In that case both points may be removed from the point cloud to make sure no faulty point is used. However, it is realized that a lot of correct points then will be removed as well, which is undesirable or even critical in some situations. With some further assumption that may be reasonable in some circumstances, viz. that it is always the point closest to the camera that is correct in case of conflict, some improvement can be accomplished with no, or at least less, removal of correct points. However, there are situations when also this method results in correct points being removed, namely when it is not the point closest to the camera that is correct. This can for example happen if the faulty point is due to noise or reflections, which can result in false points closer and/or further away from the camera in relation to a correct point. In that case, always removing the point closest to the camera may even have a worsening effect, since a correct point can be removed and false one be kept.

Embodiments herein provide improvements regarding the above. In short, they can be described as based on a statistical approach and/or consensus voting. All, or a large number of points, of a point cloud may be checked for conflict with the other points of the group, but instead of only considering points that are conflicting with each other and then remove all or some of the points that are in conflict, each point may be attributed a score each time they are identified as involved in a conflict with another point. That is, when a point of the point cloud is involved in a conflict, its score is increased and this is done for all points of the point cloud. As a result, the total score of each point will indicate, even be proportional to, the number of conflicts that the point in total has been involved in. Hence, it is possible to compare and evaluate points by their total score, i.e. the total number of conflicts they are involved in, not only if they are involved in a conflict or not. Then all points involved in conflicts above a certain score, corresponding to a threshold, may be removed. In other words, points involved in the greatest number of conflicts are removed with this approach, without taking any removal decision on basis of just identification of a conflict as such. The truly incorrect points, i.e. those that are not in positions corresponding to imaged real surface locations on the real world measure object, e.g. the measure object 220 or 320, are typically involved in more conflicts than other points, at least in average, and will thus to a greater extent be removed with the approach according to embodiments herein.

Said threshold can be predetermined but in a flexible way. There can e.g. be implemented a slider bar that changes the threshold and the result can be visualized directly in a virtual 3D object drawn based on the remaining surface points of the point cloud. This makes it possible for a user to, for a given setup, find a suitable threshold level that removes points that else result in artefacts when the 3D object is drawn based on the remaining surface points of the point cloud. Typical artefacts are spikes occurring in the 3D virtual object when it is drawn. At the same time the user can make sure that a too low threshold is not being used, i.e. one that result in removal of actual object details that are desirable to keep.

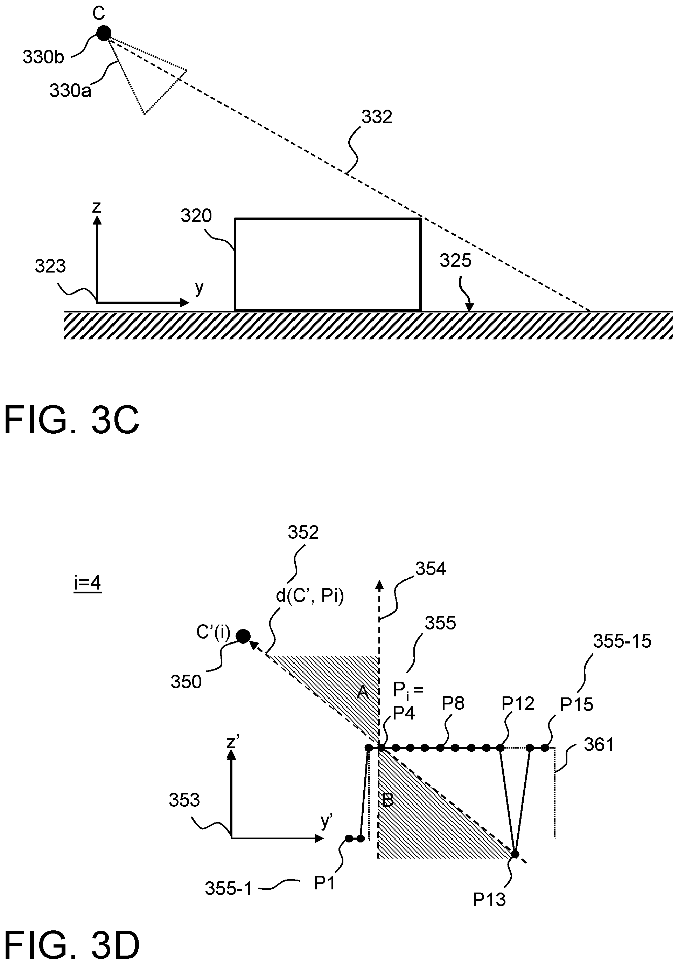

**Figure 3C** is a side view of the measure object 320 as shown in Figure 3B. It is in this figure also shown an exemplifying surface 325, excluded in Figure 3B, that supports the measure object 320 and that the measure object 320 resides on. The surface 325 may e.g. be part of a conveyor band or similar, e.g. as may be used during in light triangulation as mentioned above, or can be a surface that is fixed, e.g. part of a table or similar. In the latter case and light triangulation, the camera and light source may move to accomplish scanning of the measure object 320. Note that the surface 325 need not be imaged, and can for example be outside the field of view, or be excluded in the point cloud. In some embodiments there may be a surface, or other structure, located not below but e.g. at the side or above the measure object 320, and that the measure object is connected to, for example to make sure the measure object stays at certain location, orientation and/or is moved in a desirable way during the 3D imaging.

**Figure 3D** is a virtual view corresponding to the real world view in Figure 3C. Figure 3D schematically shows some surface points P1-P15 (only some surface points are explicitly marked out) of a point cloud in a 3D virtual coordinate system 353, in x', y', z', corresponding to a virtual version of the real world coordinate system 323, in x, y, z. The point cloud here thus comprises surface points of a virtual object corresponding to the measure object 320. The measure object and what its side view would look like if it was perfectly modelled is indicated by the thin dotted contour line 361 in Figure 3D, which is shown just for reference.

Compare for example Figures 3C-3D with the situation exemplified in Figure 2, explained above, regarding how the point cloud 260 in the 3D virtual coordinate system 253, i.e. in x', y', z' can be formed by 3D imaging, in the example by light triangulation and line scanning, of the measure object 320 in the real world coordinate system 323, i.e. in x, y, z. Hence, the surface points P1-P15 in Figure 3D may be of a point cloud resulting from 3D imaging of the measure object 320, for example resulting from light triangulation and line scanning using the imaging system 305.

The surface points P1-P15 are shown connected to each other to illustrate the situation mentioned above, that surface points are assumed to be connected to their closest neighboring surface points. This is visualized in the figure to facilitate understanding regarding conflicting points that are described next. The points connected may in general be those that would have been connected if tessellation or similar, as mentioned above, would be applied in order to generate a 3D virtual object from the points.

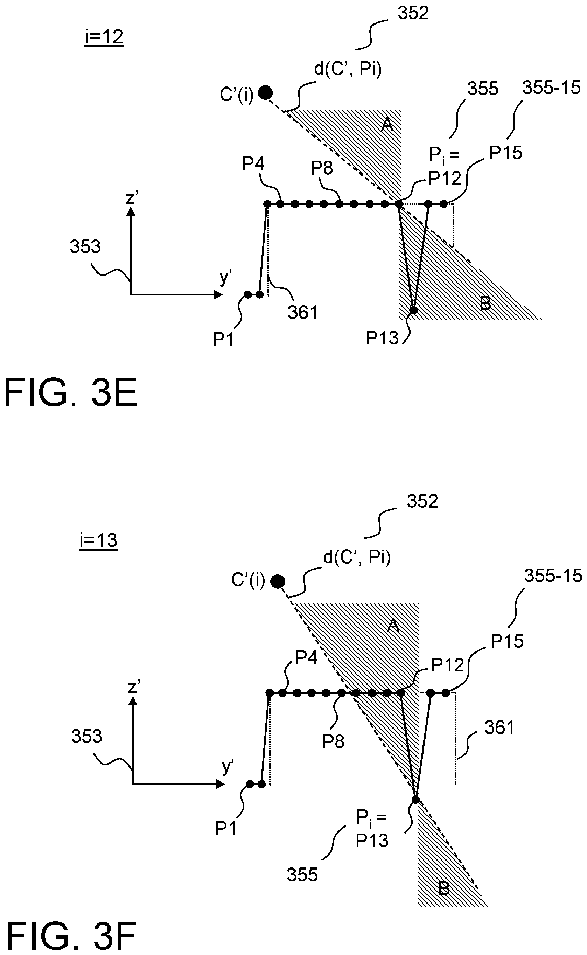

Figure 3D, and also Figures 3E-F described further below, schematically illustrate and will be used in the following to explain and exemplify principles behind embodiments herein, such as regarding identification of which surface points are in conflict with each other, and which are not. The figures are thus for exemplifying a case when a setup as in Figure 3A has been used.

Figure 3D is for illustrating an example when a point under investigation, i.e. a point to identify conflicts in relation to, Pi, is the point P4, i.e. in the example Pi=P4. Figure 3E is about a corresponding situation but with Pi=P12 and Figure 3F when Pi=P13. As mentioned above, checking for conflicts for a point is about identifying which other points, if any, that are in conflict with said point, or in other words, which other points, if any, cannot validly exist at the same time as the point being investigated, i.e. the point for which conflicts are being identified.

In Figures 3D-F, a point C'(i) corresponds to the location of the camera for point Pi in the 3D virtual coordinate system 353, i.e. in the same coordinate system as the points of the point cloud, here P1-P15. The location of C' may this be referred to as a virtual camera location. The location of the camera may suitably correspond to and/or be represented by the camera center, C. The skilled person is able to determine camera center position given the type of camera and setup that is used, or if other representation of camera position is more suitable, e.g. as discussed further below.

Note that depending on the 3D imaging system and setup used for the 3D imaging of the measure object 320, i.e. the imaging that results in the images the surface points of the point cloud are based on, the camera location C' in the 3D virtual coordinate system x',y',z' may be different for different surface points. In case of light triangulation with line scan, the camera location C' is the same in relation to the light line illuminating the measure object and thus e.g. the same in relation to each profile image, e.g. the same in relation to each profile image 141-1..141-N. However, since the time dimension, that is, the time when respective image frame is captured, is utilized to provided information about a third dimension for the 3D virtual coordinate system, more specifically about y' in the examples shown herein, it is realized that the camera position C' is different for different positions in y'. In the examples, with i denoting position along y', this means that the camera position C' depend on i, i.e. C'(i). In other words, the camera position C' in x', y', z' is the same for the same y' and i. However, if z' changes for a point P, as e.g. is the case for P13 compared to P3-P12, C'(i) is still the same position as if P13 would be positioned at the same z' as P3-P12, which means that the camera direction will be different for P13. In the examples this can be seen in Figure 3F. The camera direction, i.e. the direction in x', y', z' from a surface point Pi to the camera position C' for that surface point Pi, can in the example be represented by a virtual light line 352, d, that depends on C' and Pi and thus can be expressed as d(C', Pi). Since d and camera direction is in a 3D virtual coordinate system, here the 3D virtual coordinate system 353, i,e. in x', y', z', 353, such camera direction may be referred to as a virtual camera direction.

Note that C' being dependent on the position of P need not always be the case for all relevant 3D imaging systems, i.e. 3D imaging systems that can be used to provide image data that a point cloud can be based on and then be improved by embodiments herein. Also, other dependencies than in the examples herein are of course possible.

Embodiments herein may in general be applied to surface points of a point cloud independent on how the images, i.e. the images that the point cloud is based on, are provided but there should be a predefined mapping from the real measure object via the camera and image sensor to the points of the point cloud and thereby also to a virtual 3D object based on the point cloud.

In some cases, the camera location C' may be, or be approximated, to be the same for all surface points P of a point cloud, or portion of the point cloud that embodiments herein are applied on. However, generally, to cover all possible situations, the camera location C' for a surface point P may be considered dependent on position of the surface point P in the point cloud, i.e. C'(x', y', z'), although the camera position C' is expected to be the same at least for surface points of the point cloud that are based on one and the same image frame captured by the camera. The camera position C' in the 3D virtual coordinate system may be considered predefined, or even predetermined, when embodiments herein are applied on surface points of a point cloud. The camera position C' may be considered given, or predetermined, by the 3D imaging system and setup used when capturing the mage(s) that surface points of the point cloud are derived from.

Note that Figures 3D-F only show one side view, i.e. "slice" or plane, along y', for a certain x', that is, a z'-y' plane, but that C' of course need not be located in the same plane, although this can be assumed for simplicity in the examples to follow that are about exemplifying general principles behind how the score can be computed for each surface point P. In practice, a virtual light line, d, from a point P to a camera position C' is typically a line in 3D space, i.e. in all dimensions x', y', z', not only in y', z'.

The similar is of course also the case for the points of the set, which are not only located in a single z'-y' plane as the points P1-P15 of the example, since the points are of 3D virtual object, and thus comprises points at positions that differ in all three coordinates of the 3D virtual coordinate system 353, e.g. in all of x', y', z'.

Even when embodiments herein operate on surface points P per z'-y' plane of several different such planes, e.g. with approximation that the camera position C' is located where the actual camera position is projected in that plane, improvements based on embodiments herein, with removal of surface points, have been observed compared to keeping all surface points of the point cloud. However, using the actual, or more accurate, camera position C' enable further improvements.

As already indicated above, other representations of the camera position C' than the camera center are also possible. For example, if an orthographic camera is used, e.g. the camera 330 is orthographic, such as a camera with a telecentric lens, or if the camera used is approximated by an orthographic camera, i.e. a camera with parallel rays instead of from a camera center, the result in the example of Figures 3D-F would be that all camera directions are the same, i.e. parallel virtual light lines from each point P, independent on x' and z'. Hence, the virtual light line from P13 would in that case be at the angle as from P12 and from P4. Even when a truly orthographic camera has not been used, but camera directions have been approximated as if this would be the case, improvements have been observed from application of embodiments herein.

If the camera and the camera position C' are placed further away, the effect on camera direction in the virtual coordinate system x, y, z, i.e. on virtual light lines d towards the camera from surface points P, become similar to that of an orthographic camera, namely that the camera direction for all surface points P approaches one and the same direction.

In practice, if an approximation regarding camera position C' and/or camera direction is considered, e.g. in order to facilitate and/or simplify practical implementation, routine testing and experimentation, e.g. involving simulation, can provide information on whether the approximation is sufficient or not, for example in view of requirements to be fulfilled. For example, the skilled person may in testing and experiments apply embodiments herein both using a true camera position C' and when using a desired approximation, and then compare results, e.g. compare a 3D virtual object based on surface points when the actual camera position C' has been used with another 3D virtual object based on surface points when the approximated camera position C' has been used instead.

Examples will now follow for explaining general principles behind how the score can be computed for each surface point Pi, with reference to Figures 3D-F.

In Figures 3D-F it can be seen as the surface points P1-P15 except for P13 is following the contour line 361 well, at least as well as can be expected with a surface point density as in the example. The point P13 should thus be understood as an example of an incorrect surface point, i.e. one that it is not corresponding to a real surface point on the real world measure object 320.

As already mentioned above, the example of Figure 3D is particularly for explaining identification, or investigation, of surface points that are in conflict with the surface point P4. The figure shows two "shadowing", or occlusion, areas A and B for the point Pi=P4. It should be realized that with the camera position C' shown in the figure and the assumption, mentioned above, that the measure object 320 has no parts and thus no surface points that "hang in the air", the conclusions as in the following can be made. If there are any other surface points P in the area A, P4 would be occluded, i.e. hidden from being seen by the camera. Any points in area A are thus conflicting points with P4, i.e. cannot validly coexist with P4, but as can be seen, there are none in this example. The situation with "shadowed, i.e. occluded, points may be compared with the similar situation in the "real world" discussed above in relation to Figure 3C, where the example dummy object 321a is "shadowed" by the measure object 320 and cannot be seen by the camera, but the example dummy object 321b is not.

A corresponding situation as for area A occurs in area B of Figure 3D. P4 will be occluding any point in area B and each point in area B would thus also be a conflict point with P4. As can be seen in the example, only P13 is in area B and thus a conflict point to P4. Both P4 and P13 may thus temporarily be awarded a respective score 1 or any existing score for these points may be increased by 1. For example, if P4 and P13 started with 0 and this was the first identified conflict, they may both have a score 1 resulting from the investigation of conflicting points to P4. Based on this principle it can be realized that P1-P3 are involved in no conflicts in the shown example.

Note that areas A and B, as recognized by the skilled person, may also be affected by the direction of illumination that has been used, and are in the examples herein shown with illumination as in Figure 3A. A virtual illumination direction 354 is shown in Figure 3D and it is realized, that similar as for the camera, there may be a virtual light source position that depend on position in x', y', z' . However, in the shown example, virtual illumination directions from respective point P are always vertical, i.e. along z'. The areas A and B, if such or corresponding are applied in other cases, may thus be different depending on imaging system and setup that have been used for these cases . In general, for a point P, its area A is in an area in direction towards the camera and its area B is an area away from the camera. Both areas are such that if any other points of the set are located in that area, these are conflicting points, i.e. points that cannot validly coexist with the point P. Where points that cannot validly coexist are located, depend on the imaging system and setup used for the 3D imaging. This, and thereby what corresponding area A and/or B to apply, is determinable by the skilled person based on the imaging system and setup being used in a particular case.

Figure 3E shows a corresponding example situation as in Figure 3D but with areas A and B shown for Pi=P12, i.e. i=12. Also here, only P13 is a conflict point in B for P12. In other words, P12 and P13 may have their scores increased by 1, since both are involved in a conflict with another point. Further, it can be realized that if all points P1-P12 would have been investigated correspondingly, the result after conflicting points had been identified for, and scores increased, up to and including P12, would be:

| **Surface point** | **Score** |
|---|---|
| Each one of P1-P3 | 0 |
| Each one of P4-P12 | 1 |
| P13 | 9 |

Figure 3F shows yet another example situation with areas A and B for Pi=13, i.e.
i=13. Here points P9-P12 are in area A and are thus conflicting points for P13. From the figure it may be further realized that P14-P15 are not involved in any conflicts with each other or with any of the other points P1-P13 of the example, Hence, in the shown example, the resulting score after having investigated and identified conflicting points for all of the shown points P1-P15:

| **Surface point** | **Score** |
|---|---|
| Each one of P1-P3 | 0 |
| Each one of P4-P8 | 1 |
| Each one of P9-P12 | 2 |
| P13 | 13 |
| Each one of P14-15 | 0 |

In other words, using a threshold in the range 3-13 and removing all points with score equal to or greater than this threshold would result in removal of point P13 from the point cloud P1-P15. Hence, the incorrect point 13 would be removed. It is also realized that the new resulting point cloud without P13 would better fit to the contour line 361 and thus be a better representation of the real world object than if P13 would still be part of the point cloud.

In the example, looking for conflict points in both areas A and B, i.e. both towards and away from the camera, is typically not needed. It may be preferred for implementational reasons to only look in one direction, e.g. towards or away from the camera position C', i.e. in either area A or B for respective point P. If only checking in area B, the result in the shown example would be:

| **Surface point** | **Score** |
|---|---|
| Each one of P1-P3 | 0 |
| Each one of P4-P8 | 1 |
| Each one of P9-P12 | 1 |
| P13 | 9 |
| Each one of P14-15 | 0 |

It is realized that also in this case P13 is involved in most conflicts. The principle thus works if looking for conflicting points in either area A or B for respective surface point. However, actual incorrect points will typically get higher scores if both areas are used and thereby, in some situations, more incorrect points can be removed by a threshold.

It may not be necessary to use an area A and/or area B that, for each surface point, extend to the end of the point cloud. It may instead be sufficient to only check a certain distance along the camera direction, i.e. along each surface point's virtual light line d, towards and/or away from the camera. For example, with reference to the example shown in Figure 3D-F assume it is checked only the 5 closest consecutive y' positions in area B. That is, for P4 with i=4, points P5-P9 are checked for conflicts, i.e. using an area A that extends from P4 to P9 along y'. Applying this for all points P1-P15 and else the same principles as above, the result is:

| **Surface point** | **Score** |
|---|---|
| Each one of P1-P7 | 0 |
| Each one of P8-P12 | 1 |
| P13 | 5 |
| Each one of P14-15 | 0 |

Hence, also In this situation and example it would be possible to identify P13 as a point to be removed by e.g. using a suitable threshold.

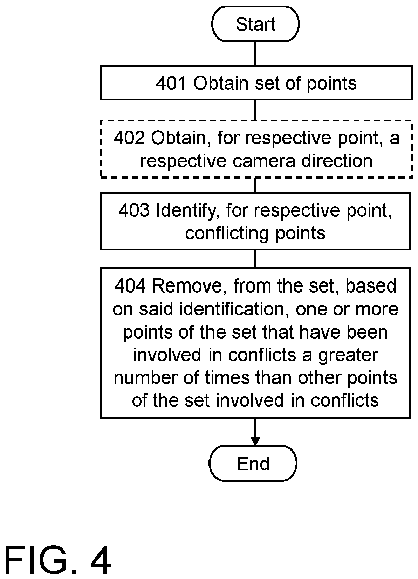

**Figure 4** is a flowchart for schematically illustrating embodiments of a method according to embodiments herein. The actions below, which may form the method, are for removing erroneous, or likely erroneous, points, corresponding to outliers as mentioned in the Background, from a set of points, e.g. the set exemplified by the points P 355-1..355-15, that is, from a point cloud. In practice a point cloud of interest to apply embodiments herein on is of course much larger than only 15 points as in the simplified example above. The number of points of the set may be in the magnitude of millions of points, just to give some example. Said points are points of a 3D virtual object, provided by 3D imaging of a corresponding real world object, e.g. of the measure object 320, by means of a camera with image sensor, e.g. the camera 330 and image sensor 331.

Further, said points of the set are typically surface points of the 3D virtual object. It is typically the surface of the real world object that is imaged, but can, for example, for partly transparent objects, be images through the actual outmost surface, and thus the virtual object and said set of points may in some cases correspond to an internal surface of the real world object.

In some embodiments, said 3D imaging is based on light triangulation comprising illumination of the real world object, e.g. of the measure object 320, by a light source, e.g. the light source 310, wherein said light emission is reflected light from the surface of the real world object resulting from said illumination.

The method and/or actions below and indicated in Figure 4 may be performed by device(s), i.e. one or more devices, such as the camera 330 and/or the computing device 333, or by the imaging system 305 and/or suitable device(s) thereof or connected to it. Device(s) for performing the method and actions thereof are further described below.

Note that the actions below may be taken in any suitable order and/or be carried out fully or partly overlapping in time when this is possible and suitable.

### Action 401

Said set of points is obtained. It may e.g. obtained from measurement and computation by the 3D imaging system, fully or partly by the same device or devices involved in performing the present method, and/or be obtained by being received from another device or unit that may be part of the 3D imaging system, but can alternatively be received from another, e.g. external device or unit, that have stored the set of points. Further, the set of points may correspond to a point cloud and may be points corresponding to, i.e. covering, the complete real world object or partially, i.e. the points may be of a 3D virtual object that correspond to only a partial 3D view of the real world object.

### Action 402

For respective point, e.g. for respective one of points 355-1..355-15, a respective camera direction, e.g. corresponding to the camera direction 352, may be obtained. The respective camera direction corresponding to direction of light emission from a corresponding point of the real world object towards the camera, which light emission was sensed by the image sensor during said 3D imaging. The virtual light line 352 above is example of such camera direction. As mentioned above, the obtained camera directions may be referred to as virtual camera directions since they are directions for points of the set and thus in relation to coordinates of a 3D virtual coordinate system used for the set. A conflicting point may be a point of the set that cannot validly coexist with the respective point based on at least its camera direction.

The camera directions may be obtained by being determined as indicated above, such as computed and/or estimated, based on knowledge of the 3D imaging system and setup used when images were sensed that the points are based on. The set of points is typically associated with a predefined mapping of how a position is a real world coordinate system, e.g. x, y, z, that the 3D imaging system and the real world object, e.g. the imaging system 305 and measure object 305, are located in, relate to coordinates of a corresponding 3D virtual coordinate system, x', y', z' that the virtual object and said set of points are in. The mapping is typically provided by a calibration performed for each 3D imaging system and setup and that is used for the 3D imaging, and is thus typically predetermined when embodiments herein are performed, and at least the mapping can be considered predefined or given by the 3D imaging system and setup used when said images were sensed. Hence, by knowledge of the camera position in x, y, z, a corresponding position in x', y', z' can be determined, and from this camera directions for the points can also be determined.

The camera directions may have been predetermined, e.g. for various positions in x', y', z', for the imaging system and setup used, and the predetermined camera directions can then be used to determine the camera position for the points of said set of points.

In some embodiments, predetermined camera directions, or even the camera directions for said set of points, may be obtained by being fully or partly received from another device or unit, e.g. one that have determined, such as computed, the camera directions.

As indicted above, determination if a point is a conflicting point, i.e. if it can validly coexist with the respective point or not, may also take into account a virtual light direction for the point, i.e. a virtual direction of incident light corresponding to the direction of incident light, e.g. from the light source 310, on the real world object, and which incident light would be the light reflected by the real world object and sensed by the camera and image sensor, such as in the case of light triangulation. The exemplary virtual illumination direction 354 discussed above corresponds to such virtual light direction

Hence, is some embodiments, the present action additionally comprises to obtain, for respective point, a respective virtual light direction corresponding to the direction of incident light, e.g. from a light source, on the corresponding point on the real world object. In these embodiments, a conflicting point may be a point of the set that cannot validly coexist with the respective point further based on its virtual light direction.

### Action 403

For respective point, e.g. for respective one of points 355-1..355-15, conflicting points, if any, of the set are identified. A conflicting point being a point of the set that cannot validly coexist with the respective point according to predefined one or more criteria. One such criteria may be based on the camera directions obtained for the points, as mentioned above under Action 402. It is realized that said one or more criteria may be further based on in principle anything that for the 3D imaging system and setup used can be used to determine what can be seen and imaged at the same time and what cannot. For example, when there is a light direction involved, e.g. in the case of light triangulation and as exemplified above, the one or more criteria may further be based on virtual light directions, e.g. to determine areas A and/or B, or similar, as in the examples above. If light cannot reach some point, this can be an additional reason the point cannot be seen by the camera and virtual light directions can thus be used together with virtual camera direction to identify a point that cannot validly exist with another point, e.g. to accomplish an improved predefined criteria to apply. However, as it is implicit that some light must have reached the camera by correct imaging of the real world object, criteria based on the camera direction and assumption that illumination has reached all points may be sufficient.

In some embodiments, a conflicting point is a point of the set that cannot validly coexist with the respective point based on assumption that the points of the set, e.g. the points 355-1..355-15, are connected by coherent surface with their, or at least some of their, closest neighboring surface points and which coherent surface would block light, e.g. such light emission mentioned under Action 402. The points that respective point is connected to by coherent surface may correspond to points that respective point would or will be connected to in order to generate a 3D virtual object from the points, e.g. by tessellation and/or according at to any prior art method for generating a 3D virtual object from a point cloud.

Further, in some embodiments, the identification of conflicting points for respective point is limited to points of the set that are present within a certain distance from the respective point. This was exemplified and discussed in some detail above in connection with Figures 3D-F and may be of particular interest to apply for complex real world objects and/or extensive sets of points, where it is undesirable and/or not practical for respective point to search through the whole point cloud to identify conflicting points. It may e.g. be sufficient to identify conflicting points, if any, that are within a distance that involve the closest neighboring point positions, e.g. pixel or rather voxel positions since it is 3D, with possible conflicting points. Said certain distance may be predefined or predetermined, and may for a specific application be based on routine experimentation and testing to find a suitable and/or acceptable distance for the application in question.

Limiting to identification over a certain distance reduces processing and enable implementations that can execute faster.

Further, conflicting points located far away may be less likely to occur and it may not be efficient to spend resources on identifying very remote conflict points, if any. Also if a remote conflicting point exists, such will likely be identified as a point with many conflicts anyway, when conflicts are identified for points closer to such point.

By for example splitting a larger set of points, or apply embodiments herein on a partial set of a complete set of a virtual object, e.g. a partial set being output during line scan and light triangulation, a similar effect as limitation to over a certain distance can be accomplished.

The number of conflicts identified for respective point, e.g. to each point of the point cloud that embodiment herein are applied to, may be kept count of, e.g. by increasing a score for each point as mentioned above.

Information, such as count, of identified conflicts for respective point may be stored. When conflicting points for the points of the set, e.g. for each point of the set, have been identified, the points have been involved in varying numbers of conflicts and there may per point be stored a value and/or identifier identifying or indicating the total number of identified conflicts that the point has been involved in.

### Action 404

It is removed from the set, based on said identification for respective point, i.e. based on Action 403, one or more points of the set that have been involved in conflicts a greater number of times than other points of the set involved in conflicts. A respective point, e.g. a point 355 being any one of the points 355-1..355-15, of the set is considered involved in a conflict each time, i.e. when, there is identified a conflicting point in the set for the respective point and/or each time the respective point itself is identified as a conflicting point to another point of the set. This was exemplified and explained in some detail above in connection with Figures 3D-F.

In some embodiments, points involved in conflicts multiple times that exceed a predefined threshold are removed from the set. The predefined threshold, typically a threshold value or number, may be as discussed above and may be predetermined in some embodiments.

In some embodiments, said one or more predefined criteria are based on what the camera, e.g. the camera 330, virtually, i.e. theoretically, can view from its corresponding position in a coordinate system of said the set of points, i.e. the coordinate system used for the positions of the points of the set, e.g. the virtual coordinate system 353. The corresponding position for the camera may be found from predefined or predetermined mapping between a real world coordinates system of the measure object, e.g. x, y, z, and virtual coordinate system of the virtual object and set of points, e.g. x', y', z', as mentioned above. The camera position may be represented by the camera center, or by other representation as also mentioned above.

What the camera virtually, i.e. theoretically, can see may thus be based on the set of points and camera position in the same coordinate system as said set of points, e.g. in x', y', z'. Note that this may be different from what the camera actually could see in the real world. An advantage of exploiting what the camera theoretically, i.e. virtually, can, or could, see, is that all computations can be done in x', y', z' using typically already available information and data, including the set of points, without the need of any additional and often complicated real world measurements and then further mappings to x', y, z' if it had to be determined what the camera actually could see.

As already mentioned above, embodiments herein provide improvements compared to deletion or removal each time a conflicting point is identified, which in many situations result in that also correct points are removed in case of conflict. With embodiments herein more correct points can remain while still truly incorrect points, i.e. points not in positions corresponding to imaged real locations on the real world object, e.g. the measure object 220 or 320, can be removed.

Embodiments herein, as described above, may be compared to such solution as in the prior art mentioned in the Background, where decision for deletion, i.e. removal, of part of a profile is taken based on existence of a blind spot region for the profile, i.e. based on the fact that there is a conflict and thus that deletion is made for all identified conflicts. In other words, in the prior art removal is based on there being identified a conflict, not based on how many conflicts a point has been involved in.

Further, embodiments herein may be efficient to remove erroneous points caused by noise or reflections. In case of 3D imaging based on light triangulation, reflections can be reduced or removed as part of intensity peak finding, but with embodiment herein erroneous points due to reflections may additionally or alternatively be removed from the point cloud.

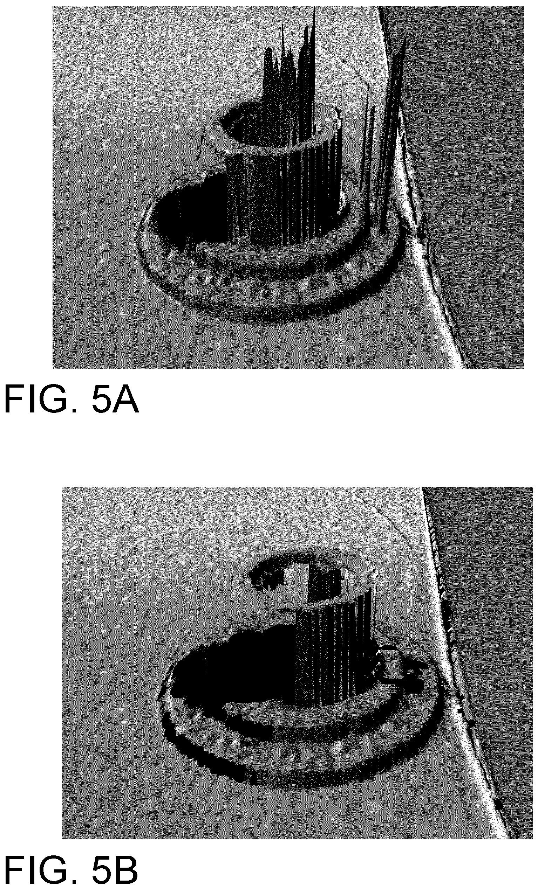

Figures 5A-B show virtual 3D object images of a measure object without and with application of embodiments herein, respectively.

Figure 5A shows an image of 3D virtual object based on an obtained set of points, i.e. point cloud with application of embodiments herein. The point cloud has been provided as conventionally, here from prior art light triangulation. The point cloud may correspond to such that is obtained in Action 401 and that embodiments herein operate on. As can be seen, the point cloud comprises outliers, i.e. incorrect points, causing distortions, visible as "spikes" on the object shown in the image.

Figure 5B show another image of a corresponding 3D virtual object based on the same obtained set of points but after application of embodiments herein, i.e. after removal of points involved in conflicts above a certain threshold. In the shown example, embodiments herein were applied to a set of about 30000 points and for respective point conflicting points, if any, within a distance of 25 pixels, away were identified. The score for respective point was 0 at the start and each identified conflict resulted in an increase of the score by 1. A total score threshold of 3 was used and all points with a total score above this threshold were removed from the set. The result was removal of 1804 points. The improvement can be clearly seen, with said "spikes" no longer present on the shown image.

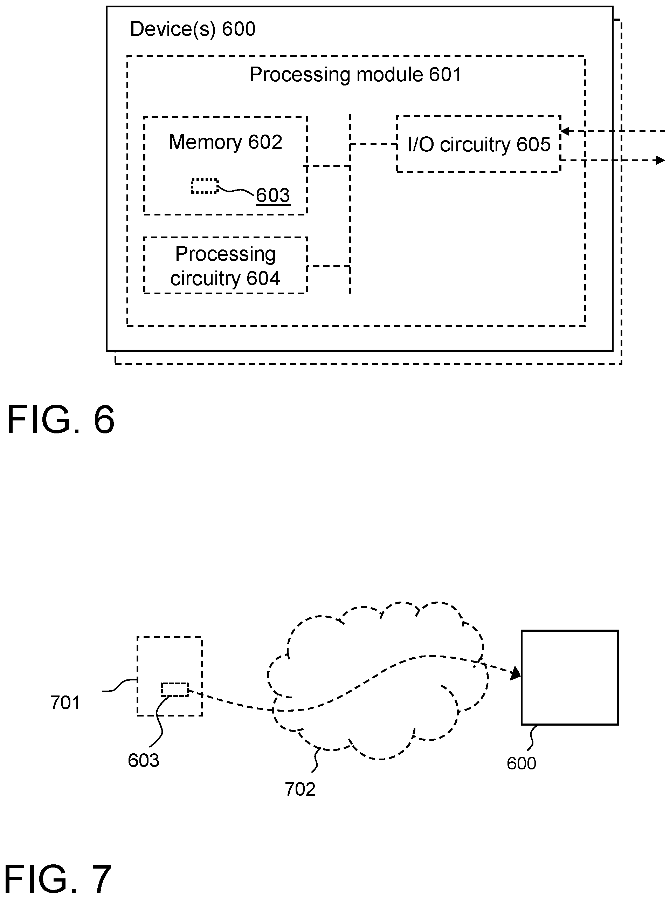

**Figure 6** is a schematic block diagram for illustrating embodiments of one or more devices 600, i.e. device(s) 600, that may correspond to devices(s) already mentioned in the above for performing embodiments herein, such as for performing the method and/or actions described above in relation to Figure 4. Hence, the device(s) 600 is for removing erroneous points from a set of points of a 3D virtual object provided by 3D imaging of a corresponding real world object by means of a camera with image sensor, e.g. as provide by 3D imaging of the measure object 320 by means of the camera 3303 with image sensor 331. The device(s) 600 may e.g. correspond to the computing device 333 and/or the camera 330, or suitable devices comprised in and/or forming a 3D imaging system that comprises the camera and image sensor, e.g. the imaging system 305, or may be a device, e.g. computer, that is external from the 3D imaging system providing the set of points.

The schematic block diagram is for illustrating embodiments regarding how the device(s) 600 may be configured to perform the method and actions discussed above in relation to Figure 4.

The device(s) 600 may comprise a processing module 601, such as processing means, one or more hardware modules, including e.g. one or more processing circuits, circuitry, such as processors, and/or one or more software modules for performing said method and/or actions.

The device(s) 600 may further comprise memory 602 that may comprise, such as contain or store, a computer program 603. The computer program 603 comprises 'instructions' or 'code' directly or indirectly executable by the device(s) 600 to perform said method and/or actions. The memory 602 may comprise one or more memory units and may further be arranged to store data, such as configurations, data and/or values, involved in or for performing functions and actions of embodiments herein.

Moreover, the device(s) 600 may comprise processing circuitry 604 involved in processing and e.g. encoding data, as exemplifying hardware module(s) and may comprise or correspond to one or more processors or processing circuits. The processing module(s) 601 may comprise, e.g. `be embodied in the form of' or 'realized by' the processing circuitry 604. In these embodiments, the memory 602 may comprise the computer program 603 executable by the processing circuitry 604, whereby the device(s) 600 is operative, or configured, to perform said method and/or actions thereof.

Typically the device(s) 600, e.g. the processing module(s) 601, comprises an Input/Output (I/O) module(s) 605, configured to be involved in, e.g. by performing, any communication to and/or from other units and/or devices, such as sending and/or receiving information to and/or from other devices. The I/O module(s) 605 may be exemplified by obtaining, e.g. receiving, module(s) and/or providing, e.g. sending, module(s), when applicable.

Further, in some embodiments, the device(s) 600, e.g. the processing module(s) 601, comprises one or more of obtaining module(s), identifying module(s), removing modules(s), as exemplifying hardware and/or software module(s) for carrying out actions of embodiments herein. These modules may be fully or partly implemented by the processing circuitry 604.

Hence:
The device(s) 600, and/or the processing module(s) 601, and/or the processing circuitry 604, and/or the I/O module(s) 605, and/or the obtaining module(s), are operative, or configured, to, obtain said set of points.

The device(s) 600, and/or the processing module(s) 601, and/or the processing circuitry 604, and/or the I/O module(s) 605, and/or the obtaining module(s), may be operative, or configured, to, obtain, for said respective point, said respective camera direction.

The device(s) 600, and/or the processing module(s) 601, and/or the processing circuitry 604, and/or the identifying module(s), are operative, or configured, to, identify, for said respective point, said conflicting points.

The device(s) 600, and/or the processing module(s) 601, and/or the processing circuitry 604, and/or the removing module(s), are operative, or configured, to, remove, from said set, based on said identification for said respective point of the set, said one or more points of the set that have been involved in conflicts a greater number of times than other points of the set involved in conflicts.

**Figure 7** is a schematic drawing illustrating some embodiments relating to computer program and carriers thereof to cause said device(s) 600 discussed above to perform said method and actions.

The computer program may be the computer program 603 and comprises instructions that when executed by the processing circuitry 604 and/or the processing module(s) 601, cause the device(s) 600 to perform as described above. In some embodiments there is provided a carrier, or more specifically a data carrier, e.g. a computer program product, comprising the computer program. The carrier may be one of an electronic signal, an optical signal, a radio signal, and a computer readable storage medium, e.g. a computer readable storage medium 701 as schematically illustrated in the figure. The computer program 603 may thus be stored on the computer readable storage medium 701. By carrier may be excluded a transitory, propagating signal and the data carrier may correspondingly be named non-transitory data carrier. Non-limiting examples of the data carrier being a computer readable storage medium is a memory card or a memory stick, a disc storage medium such as a CD or DVD, or a mass storage device that typically is based on hard drive(s) or Solid State Drive(s) (SSD). The computer readable storage medium 701 may be used for storing data accessible over a computer network 702, e.g. the Internet or a Local Area Network (LAN). The computer program 603 may furthermore be provided as pure computer program(s) or comprised in a file or files. The file or files may be stored on the computer readable storage medium 701 and e.g. available through download e.g. over the computer network 702 as indicated in the figure, e.g. via a server. The server may e.g. be a web or File Transfer Protocol (FTP) server. The file or files may e.g. be executable files for direct or indirect download to and execution on said device(s) to make it perform as described above, e.g. by execution by the processing circuitry 604. The file or files may also or alternatively be for intermediate download and compilation involving the same or another processor(s) to make them executable before further download and execution causing said device(s) 600 to perform as described above.

Note that any processing module(s) and circuit(s) mentioned in the foregoing may be implemented as a software and/or hardware module, e.g. in existing hardware and/or as an Application Specific Integrated Circuit (ASIC), a Field-Programmable Gate Array (FPGA) or the like. Also note that any hardware module(s) and/or circuit(s) mentioned in the foregoing may e.g. be included in a single ASIC or FPGA, or be distributed among several separate hardware components, whether individually packaged or assembled into a System-on-a-Chip (SoC).

Those skilled in the art will also appreciate that the modules and circuitry discussed herein may refer to a combination of hardware modules, software modules, analogue and digital circuits, and/or one or more processors configured with software and/or firmware, e.g. stored in memory, that, when executed by the one or more processors may make the device(s), sensor(s) etc. to be configured to and/or to perform the above-described methods and actions.

Identification by any identifier herein may be implicit or explicit. The identification may be unique in a certain context, e.g. for a certain computer program or program provider.

As used herein, the term "memory" may refer to a data memory for storing digital information, typically a hard disk, a magnetic storage, medium, a portable computer diskette or disc, flash memory, Random Access Memory (RAM) or the like. Furthermore, the memory may be an internal register memory of a processor.

Also note that any enumerating terminology such as first device, second device, first surface, second surface, etc., should as such be considered non-limiting and the terminology as such does not imply a certain hierarchical relation. Without any explicit information in the contrary, naming by enumeration should be considered merely a way of accomplishing different names.

As used herein, the expression "configured to" may mean that a processing circuit is configured to, or adapted to, by means of software or hardware configuration, perform one or more of the actions described herein.

As used herein, the terms "number" or "value" may refer to any kind of digit, such as binary, real, imaginary or rational number or the like. Moreover, "number" or "value" may be one or more characters, such as a letter or a string of letters. Also, "number" or "value" may be represented by a bit string.

As used herein, the expression "may" and "in some embodiments" has typically been used to indicate that the features described may be combined with any other embodiment disclosed herein.

In the drawings, features that may be present in only some embodiments are typically drawn using dotted or dashed lines.

When using the word "comprise" or "comprising" it shall be interpreted as nonlimiting, i.e. meaning "consist at least of".

The embodiments herein are not limited to the above described embodiments. Various alternatives, modifications and equivalents may be used. Therefore, the above embodiments should not be taken as limiting the scope of the present disclosure, which is defined by the appending claims.

## Claims

1. A computer-implemented method for removing erroneous points from a set of points (355-1..355-15) of a three dimensional, 3D, virtual object provided by 3D imaging of a corresponding real world object (320) by means of a camera (330) with an image sensor (331)
wherein the method comprises:
- obtaining (401) said set of points (355-1..355-15);
- identifying (403), for a respective point (355), conflicting points, if any, in the set
wherein a conflicting point is a point of the set that cannot validly coexist with the respective point (355) according to predefined one or more criteria; and
- removing (404), from the set, based on said identification for a respective point (355) of the set, one or more points of the set that have been involved in conflicts a greater number of times than other points of the set involved in conflicts, wherein a respective point (355) of the set is considered involved in a conflict each time there is identified a conflicting point in the set for the respective point and/or each time the respective point itself (355) is identified as a conflicting point to another point of the set.

2. The method as claimed in claim 1, wherein points involved in conflicts multiple times that exceed a predefined threshold are removed from the set.

3. The method as claimed in any one of claims 1-2, wherein said one or more predefined criteria at least are based on what the camera (330) virtually can view from its corresponding position in a coordinate system (353) of said set of points (355-1..355-15).

4. The method as claimed in any one of claims 1-3, wherein the method further comprises;
- obtaining (402), for a respective point (355), a respective camera direction (352) corresponding to direction of light emission from a corresponding point of the real world object (320) towards the camera (330), which light emission was sensed by the image sensor (331) during said 3D imaging;
wherein a conflicting point is a point of the set that cannot validly coexist with the respective point (355) based on at least its camera direction (352).

5. The method as claimed in any one of claims 1-4, wherein a conflicting point is a point of the set that cannot validly coexist with the respective point (355) based on assumption that the points (355-1..355-15) of the set are connected by coherent surface with closest neighboring surface points and which coherent surface would block light.

6. The method as claimed in any one of claims 1-5, wherein the identification of conflicting points for a respective point is limited to points of the set that are present within a certain distance from the respective point.

7. The method as clamed in claim 7, wherein the 3D imaging is based on light triangulation comprising illumination of said real world object (320) by a light source (310), wherein said light emission is reflected light from the surface of said real world object (320) resulting from said illumination.

8. Computer program (603) comprising instructions that when executed by one or more processors (604) causes one or more devices (600) to perform the method according to any one of claims 1-7.

9. Carrier comprising the computer program (603) according to claim 8, wherein the carrier is one of an electronic signal, optical signal, radio signal or computer readable storage medium (701).

10. One or more devices (600) for removing erroneous points from a set of points (355-1..355-15) of a three dimensional, 3D, virtual object provided by 3D imaging of a corresponding real world object (320) by means of a camera (330) with an image sensor (331), wherein said one or more devices are configured to:
obtain (401) said set of points (355-1..355-15);
identify (403), for a respective point (355), conflicting points, if any, in the set wherein a conflicting point is a point of the set that cannot validly coexist with the respective point (355) according to predefined one or more criteria; and
remove (404), from the set, based on said identification for a respective point (355) of the set, one or more points of the set that have been involved in conflicts a greater number of times than other points of the set involved in conflicts, wherein a respective point (355) of the set is considered involved in a conflict each time there is identified a conflicting point in the set for the respective point and/or each time the respective point itself (355) is identified as a conflicting point to another point of the set.

## Patentansprüche

1. Computerimplementiertes Verfahren zum Entfernen fehlerhafter Punkte aus einem Satz von Punkten (355-1..355-15) eines dreidimensionalen, 3D, virtuellen Objekts, bereitgestellt durch 3D-Bildgebung eines entsprechenden realen Objekts (320) mittels einer Kamera (330) mit einem Bildsensor (331),
wobei das Verfahren Folgendes umfasst:
- Erhalten (401) des Satzes von Punkten (355-1..355-15);
- Identifizieren (403) von Konfliktpunkten, falls vorhanden, für einen jeweiligen Punkt (355) in dem Satz,
wobei ein Konfliktpunkt ein Punkt des Satzes ist, der gemäß einem oder mehreren vordefinierten Kriterien nicht berechtigt mit dem jeweiligen Punkt (355) koexistieren kann; und
- Entfernen (404), basierend auf der Identifizierung für einen jeweiligen Punkt (355) des Satzes, eines oder mehrerer Punkte des Satzes aus dem Satz, die häufiger in Konflikte verwickelt waren als andere Punkte des Satzes, die in Konflikte verwickelt sind, wobei ein jeweiliger Punkt (355) des Satzes als in einen Konflikt verwickelt angesehen wird, wenn ein Konfliktpunkt in dem Satz für den jeweiligen Punkt identifiziert wird und/oder wenn der jeweilige Punkt selbst (355) als Konfliktpunkt zu einem anderen Punkt des Satzes identifiziert wird.

2. Verfahren nach Anspruch 1, wobei Punkte, die mehrfach in Konflikte verwickelt sind, die einen vordefinierten Schwellenwert überschreiten, aus dem Satz entfernt werden.

3. Verfahren nach einem der Ansprüche 1-2, wobei das eine oder die mehreren vordefinierten Kriterien zumindest darauf basieren, was die Kamera (330) von ihrer entsprechenden Position in einem Koordinatensystem (353) des Satzes von Punkten (355-1..355-15) virtuell sehen kann.

4. Verfahren nach einem der Ansprüche 1-3, wobei das Verfahren weiter Folgendes umfasst:
- Erhalten (402), für einen jeweiligen Punkt (355), einer jeweiligen Kamerarichtung (352), die einer Richtung von Lichtemission von einem entsprechenden Punkt des realen Objekts (320) in Richtung der Kamera (330) entspricht, welche Lichtemission während der 3D-Bildgebung von dem Bildsensor (331) erfasst wurde;
wobei ein Konfliktpunkt ein Punkt des Satzes ist, der zumindest basierend auf seiner Kamerarichtung (352) nicht berechtigt mit dem jeweiligen Punkt (355) koexistieren kann.

5. Verfahren nach einem der Ansprüche 1-4, wobei ein Konfliktpunkt ein Punkt des Satzes ist, der nicht berechtigt mit dem jeweiligen Punkt (355) koexistieren kann, basierend auf der Annahme, dass die Punkte (355-1..355-15) des Satzes durch eine kohärente Oberfläche mit den nächstgelegenen benachbarten Oberflächenpunkten verbunden sind und welche kohärente Oberfläche Licht blockieren würde.

6. Verfahren nach einem der Ansprüche 1-5, wobei die Identifizierung von Konfliktpunkten für einen jeweiligen Punkt auf Punkte des Satzes beschränkt ist, die innerhalb einer bestimmten Entfernung vom jeweiligen Punkt vorhanden sind.

7. Verfahren nach Anspruch 7, wobei die 3D-Bildgebung auf Lichttriangulation basiert, die Beleuchtung des realen Objekts (320) durch eine Lichtquelle (310) umfasst, wobei die Lichtemission von der Oberfläche des realen Objekts (320) reflektiertes Licht ist, das sich aus der Beleuchtung ergibt.

8. Computerprogramm (603), das Anweisungen umfasst, die, wenn sie von einem oder mehreren Prozessoren (604) ausgeführt werden, eine oder mehrere Vorrichtungen (600) veranlassen, das Verfahren nach einem der Ansprüche 1-7 durchzuführen.

9. Träger, der das Computerprogramm (603) nach Anspruch 8 umfasst, wobei der Träger eines von einem elektronischen Signal, optischen Signal, Funksignal oder computerlesbaren Speichermedium (701) ist.

10. Eine oder mehrere Vorrichtungen (600) zum Entfernen fehlerhafter Punkte aus einem Satz von Punkten (355-1..355-15) eines dreidimensionalen, 3D, virtuellen Objekts, bereitgestellt durch 3D-Bildgebung eines entsprechenden realen Objekts (320) mittels einer Kamera (330) mit einem Bildsensor (331), wobei die eine oder mehreren Vorrichtungen konfiguriert sind zum:
Erhalten (401) des Satzes von Punkten (355-1..355-15);
Identifizieren (403) von Konfliktpunkten, falls vorhanden, für einen jeweiligen Punkt (355) in dem Satz,
wobei ein Konfliktpunkt ein Punkt des Satzes ist, der gemäß einem oder mehreren vordefinierten Kriterien nicht berechtigt mit dem jeweiligen Punkt (355) koexistieren kann; und
Entfernen (404), basierend auf der Identifizierung für einen jeweiligen Punkt (355) des Satzes, eines oder mehrerer Punkte des Satzes aus dem Satz, die häufiger in Konflikte verwickelt waren als andere Punkte des Satzes, die in Konflikte verwickelt sind, wobei ein jeweiliger Punkt (355) des Satzes als in einen Konflikt verwickelt angesehen wird, wenn ein Konfliktpunkt in dem Satz für den jeweiligen Punkt identifiziert wird und/oder wenn der jeweilige Punkt selbst (355) als Konfliktpunkt zu einem anderen Punkt des Satzes identifiziert wird.

## Revendications

1. Procédé mis en oeuvre par ordinateur pour supprimer des points erronés d'un ensemble de points (355-1 ..355-15) d'un objet virtuel tridimensionnel, 3D, fourni par imagerie 3D d'un objet du monde réel correspondant (320) au moyen d'une caméra (330) dotée d'un capteur d'image (331)
dans lequel le procédé comprend :
- l'obtention (401) dudit ensemble de points (355-1..355-15) ;
- l'identification (403), pour un point respectif (355), de points en conflit, le cas échéant, dans l'ensemble
dans lequel un point en conflit est un point de l'ensemble qui ne peut pas valablement coexister avec le point respectif (355) selon un ou plusieurs critères prédéfinis ; et
- la suppression (404), de l'ensemble, sur la base de ladite identification pour un point respectif (355) de l'ensemble, d'un ou de plusieurs points de l'ensemble qui ont été impliqués dans des conflits un plus grand nombre de fois que d'autres points de l'ensemble impliqués dans des conflits, dans lequel un point respectif (355) de l'ensemble est considéré comme étant impliqué dans un conflit chaque fois qu'un point en conflit dans l'ensemble est identifié pour le point respectif et/ou chaque fois que le point respectif (355) proprement dit est identifié comme étant un point en conflit avec un autre point de l'ensemble.

2. Procédé selon la revendication 1, dans lequel des points impliqués dans des conflits de multiples fois qui dépassent un seuil prédéfini, sont supprimés de l'ensemble.

3. Procédé selon l'une quelconque des revendications 1-2, dans lequel lesdits un ou plusieurs critères prédéfinis sont au moins basés sur ce que la caméra (330) peut virtuellement voir depuis sa position correspondante dans un système de coordonnées (353) dudit ensemble de points (355-1..355-15).

4. Procédé selon l'une quelconque des revendications 1-3, dans lequel le procédé comprend en outre :
- l'obtention (402), pour un point respectif (355), d'une direction de caméra respective (352) correspondant à une direction d'émission de lumière depuis un point correspondant de l'objet du monde réel (320) vers la caméra (330), laquelle émission de lumière a été détectée par le capteur d'image (331) pendant ladite imagerie 3D ;
dans lequel un point en conflit est un point de l'ensemble qui ne peut pas valablement coexister avec le point respectif (355) sur la base au moins de sa direction de caméra (352).

5. Procédé selon l'une quelconque des revendications 1-4, dans lequel un point en conflit est un point de l'ensemble qui ne peut pas valablement coexister avec le point respectif (355) sur la base de l'hypothèse que les points (355-1 ..355-15) de l'ensemble sont reliés par une surface cohérente aux points de surface voisins les plus proches et que cette surface cohérente bloquerait la lumière.

6. Procédé selon l'une quelconque des revendications 1-5, dans lequel l'identification de points en conflit pour un point respectif est limitée à des points de l'ensemble qui sont présents à une certaine distance du point respectif.

7. Procédé selon la revendication 7, dans lequel l'imagerie 3D est basée sur une triangulation lumineuse comprenant l'éclairage dudit objet du monde réel (320) par une source de lumière (310), dans lequel ladite émission de lumière est une lumière réfléchie depuis la surface dudit objet du monde réel (320) résultant dudit éclairage.

8. Programme informatique (603) comprenant des instructions qui, lorsqu'elles sont exécutées par un ou plusieurs processeurs (604), amènent un ou plusieurs dispositifs (600) à réaliser le procédé selon l'une quelconque des revendications 1-7.

9. Support comprenant le programme informatique (603) selon la revendication 8, dans lequel le support est l'un d'un signal électronique, d'un signal optique, d'un signal radio ou d'un support de stockage lisible par ordinateur (701).

10. Un ou plusieurs dispositifs (600) pour supprimer des points erronés d'un ensemble de points (355-1..355-15) d'un objet virtuel tridimensionnel, 3D, fourni par imagerie 3D d'un objet du monde réel correspondant (320) au moyen d'une caméra (330) dotée d'un capteur d'image (331), dans lequel lesdits un ou plusieurs dispositifs sont configurés pour :
obtenir (401) ledit ensemble de points (355-1..355-15) ;
identifier (403), pour un point respectif (355), des points en conflit, le cas échéant, dans l'ensemble
dans lequel un point en conflit est un point de l'ensemble qui ne peut pas valablement coexister avec le point respectif (355) selon un ou plusieurs critères prédéfinis ; et
supprimer (404), de l'ensemble, sur la base de ladite identification pour un point respectif (355) de l'ensemble, un ou plusieurs points de l'ensemble qui ont été impliqués dans des conflits un plus grand nombre de fois que d'autres points de l'ensemble impliqués dans des conflits, dans lequel un point respectif (355) de l'ensemble est considéré comme étant impliqué dans un conflit chaque fois qu'un point en conflit dans l'ensemble est identifié pour le point respectif et/ou chaque fois que le point respectif (355) proprement dit est identifié comme étant un point en conflit avec un autre point de l'ensemble.
